# DEMANDE DE BREVET EUROPEEN

(11) **EP 3 809 504 A1**
(43) Date de publication de la demande: **21.04.2021**
(21) Numéro de dépôt: 20197106.6
(22) Date de dépôt: 21.09.2020
(51) Int. Cl.: H01M 8/0267, H01M 8/0258, H01M 8/241, H01M 8/2483, H01M 8/1018

(54) **PLAQUE BIPOLAIRE DE PILE A COMBUSTIBLE**

(30) Priorité: 18.10.2019 FR 1911717
(71) Demandeur: L'AIR LIQUIDE SOCIÉTÉ ANONYME POUR L'ETUDE ET L'EXPLOITATION DES PROCEDES GEORGES CLAUDE, 75007 Paris (FR)
(72) Inventeur: JOHAN, André, 38360 Sassenage (FR); BOUVIER, Camille, 38360 SASSENAGE (FR); CLAUDE, Eric, 38360 Sassenage (FR); JANNIN, Nicolas, 38360 SASSENAGE (FR); SIRAC, Denis, 38360 Sassenage (FR); ZAEPFFEL, Didier, 38360 SASSENAGE (FR)
(74) Mandataire: Air Liquide

(57) **Abrégé**

L'invention concerne une plaque bipolaire (70) de pile à combustible, la plaque (70) s'étendant dans un plan vertical lorsque la pile est en position d'utilisation, en position verticale d'utilisation, la plaque (70) comportant un premier bord transversal (22), un deuxième bord transversal (24) opposé au premier bord transversal (22), un bord longitudinal supérieur (20), un bord longitudinal inférieur (26), une zone centrale (30) disposée entre les bords (20, 22, 24, 26), une première ouverture (61) d'entrée d'un fluide caloporteur, une deuxième ouverture (62) de collecte du fluide caloporteur, une troisième ouverture (63) d'entrée d'un comburant, notamment d'air, une quatrième ouverture (64) de collecte du comburant, une cinquième ouverture (65) d'entrée d'un carburant, notamment de dihydrogène, une sixième ouverture (66) de collecte du carburant, les première (61), troisième (63) et sixième (66) ouvertures étant disposées dans le premier bord transversal (22) et étant disposées axialement les unes par rapport aux autres, les deuxième (62), quatrième (64) et cinquième (65) ouvertures étant disposées dans le deuxième bord transversal (24) et étant disposées axialement les unes par rapport aux autres, en position verticale d'utilisation de la plaque : la sixième ouverture (66) étant disposée au-dessous des première (61) et troisième (63) ouvertures, la quatrième ouverture (64) étant disposée au-dessous des deuxième (62) et cinquième (65) ouvertures, et la deuxième ouverture (62) étant disposée au-dessus des quatrième (64) et cinquième (65) ouvertures.

## Description

La présente invention porte sur une plaque bipolaire de pile à combustible, une cellule de pile à combustible comportant une telle plaque et sur une pile à combustible comportant une telle cellule. L'invention trouve une application particulièrement avantageuse, mais non exclusive, avec les piles à combustible dont les cellules comportent des plaques bipolaires s'étendent dans un plan vertical lorsque la pile est en position d'utilisation.

De façon connue en soi, une pile à combustible est un dispositif électrochimique qui permet de convertir l'énergie chimique en énergie électrique à partir d'un carburant, généralement du dihydrogène, et d'un comburant, généralement du dioxygène ou un gaz en contenant tel que l'air, le produit de la réaction étant l'eau accompagnée d'un dégagement de chaleur et d'une production d'électricité.

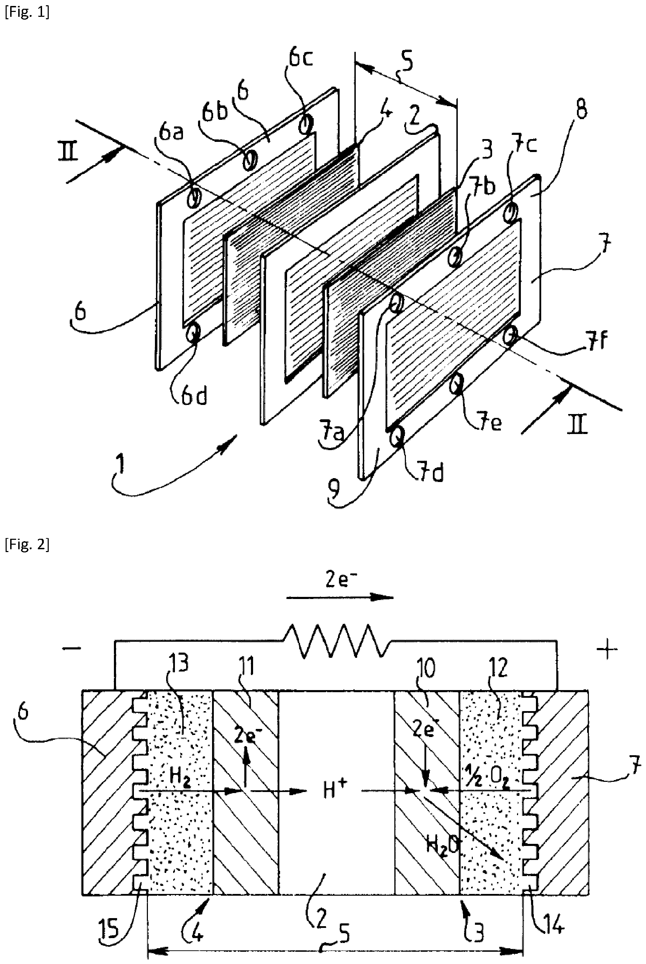

Une pile à combustible peut par exemple être utilisée pour assurer la traction d'un véhicule automobile par l'alimentation des dispositifs électriques contenus dans un véhicule.
Une pile à combustible peut être constituée d'une ou de plusieurs cellules.
En référence à la figure 1 qui représente une cellule 1 de pile à combustible de l'art antérieur, une telle cellule 1 comporte un électrolyte conducteur protonique 2 qui est pris en sandwich entre deux électrodes poreuses cathodique 3 et anodique 4 et qui assure le transfert protonique entre ces deux électrodes 3, 4.

A cet effet, l'électrolyte 2 peut être une membrane polymère échangeuse de protons notamment d'épaisseur comprise entre 20 et 200 µm, la pile résultante étant une pile de type PEM (pour « Proton Exchange Membrane ») ou PEMFC (pour « Proton Exchange Membrane Fuel Cell »).

L'ensemble constitué par l'électrolyte 2 et les deux électrodes 3, 4 forme un Assemblage Membrane Électrodes (AME) 5 qui est lui-même pris en sandwich entre des première 6 et deuxième 7 plaques bipolaires qui assurent la collecte du courant, la distribution du comburant et du carburant dans les électrodes 3,4 et la circulation du fluide caloporteur. Les plaques bipolaires 6,7 couramment utilisées sont réalisées dans des matériaux offrant de bonnes propriétés de résistance à la corrosion et de conductivité électrique, tels que des matériaux carbonés comme du graphite, du graphite imprégné de polymère ou des feuilles de graphite souple mis en forme par usinage ou par moulage.

Il est également possible, pour réaliser les plaques bipolaires 6, 7, d'utiliser des matériaux métalliques tels que des alliages à base de titane, d'aluminium et de fer dont les aciers inoxydables. Dans ce cas, la mise en forme de la plaque bipolaire peut être obtenue par emboutissage ou estampage de feuilles de faible épaisseur.

Afin d'assurer la distribution du comburant, du carburant et du fluide caloporteur dans toutes les cellules constitutives de la pile, la deuxième plaque bipolaire 7 comporte six ouvertures 7a, 7b, 7c, 7d, 7e, 7f dont trois d'entre elles 7a, 7b, 7c sont disposées sur le bord supérieur 8 de cette plaque 7, les trois autres ouvertures 7d, 7e, 7f étant, de façon symétrique, disposées sur le bord inférieur 9 de cette plaque 7.

La première plaque bipolaire 6 comporte les mêmes ouvertures disposées aux mêmes endroits que sur la plaque bipolaire 7, la figure 1 ne laissant apparaître que les trois ouvertures supérieures 6a, 6b, 6c et une ouvertures inférieure 6d.

Les ouvertures 6a, 6b, 6c, 6d de la première plaque bipolaire 6 et les ouvertures 7a, 7b, 7c, 7d, 7e, 7f de la deuxième plaque bipolaire 7 sont alignées pour former ainsi des collecteurs assurant la circulation des fluides à travers toutes les cellules constitutives de la pile.
Au niveau de chacune de ces ouvertures 7a, 7b, 7c, 7d, 7e, 7f, 6a, 6b, 6c, 6d, un conduit non représenté permet d'alimenter en ou de collecter le fluide caloporteur, le carburant ou le comburant circulant à la surface de la plaque 6,7 ou dans la plaque 6,7 ou dans des canaux de circulation de fluides prévus à cet effet.

En référence à la figure 2 qui est une coupe selon la ligne II-II de la figure 1, les électrodes cathodique 3 et anodique 4 comportent chacune une couche active respective 10, 11 qui sont le siège des réactions respectivement cathodique et anodique et une couche de diffusion respective 12, 13 intercalée entre la couche active 10,11 et la plaque bipolaire correspondante 7,6, cette couche de diffusion 12, 13 pouvant par exemple être un substrat en papier ou un tissu de carbone.
La couche de diffusion 12,13 assure la diffusion des réactifs tels que le dihydrogène et le dioxygène qui circulent dans les canaux respectifs 14, 15 formés par des rainures réalisées dans les plaques bipolaires respectives 7, 6.

De cette façon, la couche active 11 de l'électrode anodique 4 est alimentée en dihydrogène via la couche de diffusion 13 et la réaction qui se produit dans cette couche active 11 est la suivante: H₂ → 2e⁻ + 2H⁺. De la même façon, la couche active 10 de l'électrode cathodique 3 est alimentée en oxygène via la couche de diffusion 12 et la réaction qui se produit au niveau de cette couche active 10 est la suivante: ½ O₂ + 2H⁺ + 2e⁻ → H₂O. Ces réactions sont rendues possibles par la présence de la membrane 2 qui assure le transfert protonique depuis la couche active 11 de l'anode 4 vers la couche active 10 de la cathode 3.

Dans le cas où la pile à combustible est refroidie avec un liquide, notamment dans le cas des piles à combustibles à basse température (aussi appelées « LT-PEM » pour « Low Temperature Proton Exchange Membrane »), les plaques bipolaires s'étendent dans un plan vertical lorsque la pile est en position d'utilisation. Il est important d'assurer une circulation des fluides de manière homogène et d'éviter à la fois l'accumulation d'eau dans les collecteurs et/ou les canaux qui se trouvent dans la partie inférieure des plaques mais aussi d'éviter de piéger les gaz dissous au niveau des collecteurs et/ou des canaux qui se trouvent dans la partie supérieure des plaques.

En outre, la performance et la durée de vie des systèmes équipés de piles à combustible dépend largement de la qualité d'acheminement des réactifs et la gestion de l'eau produite par la réaction. La distribution des réactifs doit être aussi homogène que possible, l'Assemblage Membrane Électrodes doit maintenir un bon niveau d'hydratation, et simultanément, l'eau doit être évacuée autant que possible de la porosité des électrodes afin de justement permettre aux réactifs d'accéder aux sites réactionnels. Plus précisément, un compromis doit être fait entre l'assèchement du conducteur protonique de la membrane en entrée des gaz, et le noyage des électrodes en sortie des gaz.

La présente invention vise à remédier efficacement à ces inconvénients en proposant une plaque bipolaire de pile à combustible, la plaque s'étendant dans un plan vertical lorsque la pile est en position d'utilisation, en position verticale d'utilisation, la plaque comportant un premier bord transversal, un deuxième bord transversal opposé au premier bord transversal, un bord longitudinal supérieur, un bord longitudinal inférieur, une zone centrale disposée entre les bords, une première ouverture d'entrée d'un fluide caloporteur, une deuxième ouverture de collecte du fluide caloporteur, une troisième ouverture d'entrée d'un comburant, notamment d'air, une quatrième ouverture de collecte du comburant, une cinquième ouverture d'entrée d'un carburant, notamment de dihydrogène, une sixième ouverture de collecte du carburant, les première, troisième et sixième ouvertures étant disposées dans le premier bord transversal et étant disposées axialement les unes par rapport aux autres, les deuxième, quatrième et cinquième ouvertures étant disposées dans le deuxième bord transversal et étant disposées axialement les unes par rapport aux autres, la plaque comportant au moins une chambre de distribution, caractérisée en ce qu'en position verticale d'utilisation de la plaque :
- la sixième ouverture est disposée au-dessous des première et troisième ouvertures,
- la quatrième ouverture est disposée au-dessous des deuxième et cinquième ouvertures,
- la deuxième ouverture est disposée au-dessus des quatrième et cinquième ouvertures.

Du fait de l'augmentation de la température du fluide caloporteur, lors de la traversée de la cellule, en entrée de la cathode, l'excès d'air favorise un assèchement du ionomère qui constitue partiellement les couches actives de la membrane. En outre, en sortie de la cathode, l'eau produite accumulée favorise un noyage des électrodes. L'invention permet ainsi, lorsque la plaque est en position verticale d'utilisation, c'est-à-dire lorsque la pile est en position horizontale d'utilisation, de favoriser l'évacuation de l'eau et le dégazage du fluide caloporteur sans compromettre l'homogénéité de la distribution des fluides.

Le positionnement particulier de la deuxième ouverture permet l'évacuation naturelle des bulles de gaz piégées dans le circuit de refroidissement. En effet, étant donné la position verticale de la plaque, les bulles de gaz qui se forment dans ce circuit, se retrouvent dans la partie haute de la chambre de distribution et peuvent ainsi être évacuées par la deuxième ouverture qui se trouve au même niveau.

De manière surprenante, l'avantage procuré par un tel agencement du circuit de refroidissement compense avantageusement le déséquilibre au niveau des pertes de charges, induit par la dissymétrie entre les sixième et cinquième ouvertures.
Selon une réalisation, en position verticale d'utilisation de la plaque, la troisième ouverture est disposée au-dessus des première et sixième ouvertures.

Une telle configuration permet d'éviter le noyage du compartiment anodique, par la disposition relative de la collecte du carburant, tandis que la situation de contre-courant comburant/carburant et de co-courant comburant/fluide caloporteur homogénéise les conditions opératoires de la cellule par une meilleure gestion de l'eau.

Selon une réalisation, la chambre de distribution est disposée au niveau du premier bord transversal, à la surface de la plaque, la chambre de distribution s'étendant notamment au moins en vis-à-vis des troisième, première et sixième ouvertures.

Selon une réalisation, la chambre de distribution est disposée au niveau du deuxième bord transversal, à la surface de la plaque, la chambre de distribution s'étendant notamment au moins en vis-à-vis des deuxième, cinquième et quatrième ouvertures.
Cette configuration permet d'équilibrer les pertes de charge (entre l'entrée et la collecte) de sorte que la chambre de distribution ne requière pas de dessin spécifique pour équilibrer le débit de fluide. Ainsi, l'encombrement de la plaque et la perte de charge sont réduits. Selon une réalisation, la chambre de distribution comporte des motifs en saillie, notamment des plots ou des lignes de soudure, pour favoriser l'homogénéité de la distribution d'un fluide.

Selon une réalisation, la plaque comporte des canaux de circulation disposés dans la zone centrale, notamment à la surface de la plaque, par exemple sous la forme d'une ondulation de ladite surface.

Selon une réalisation, les canaux de circulation s'étendent dans l'axe longitudinal de la plaque.

Une telle configuration permet de diminuer l'encombrement de la plaque tout en conservant une bonne homogénéité dans la distribution des fluides.

Selon une réalisation, chaque ouverture comportant un trou traversant la plaque dans son épaisseur.

L'invention a également pour objet une cellule de pile à combustible, notamment de pile à combustible à membrane échangeuse de protons, comportant deux plaques bipolaires telles que décrites précédemment et un assemblage membrane électrode, les plaques étant agencées pour coopérer ensemble et en ce que l'assemblage membrane électrode est interposé en sandwich entre les plaques.
Selon une réalisation, l'assemblage membrane électrode est dépourvu de catalyseur au niveau de la chambre de distribution.
L'invention a également pour objet une pile à combustible, notamment à membrane échangeuse de protons, comportant au moins une cellule telle que décrite précédemment. Selon une réalisation, la pile comporte :
- un collecteur d'entrée d'un fluide caloporteur destiné à être raccordé avec une arrivée de fluide caloporteur pour permettre au fluide de circuler dans la première ouverture,
- un collecteur d'entrée d'un comburant destiné à être raccordé avec une arrivée de comburant pour permettre au comburant de circuler dans la troisième ouverture, et
- un collecteur d'entrée d'un carburant destiné à être raccordé avec une arrivée de carburant pour permettre au carburant de circuler dans la cinquième ouverture.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'une cellule de l'art antérieur;
[Fig. 2] la figure 2 est une représentation selon l'axe II-II de la figure 1 ; et
[Fig. 3] la figure 3 est une vue de face d'une plaque bipolaire d'une cellule selon l'invention. Les éléments identiques, similaires, ou analogues, conservent la même référence d'une figure à l'autre.

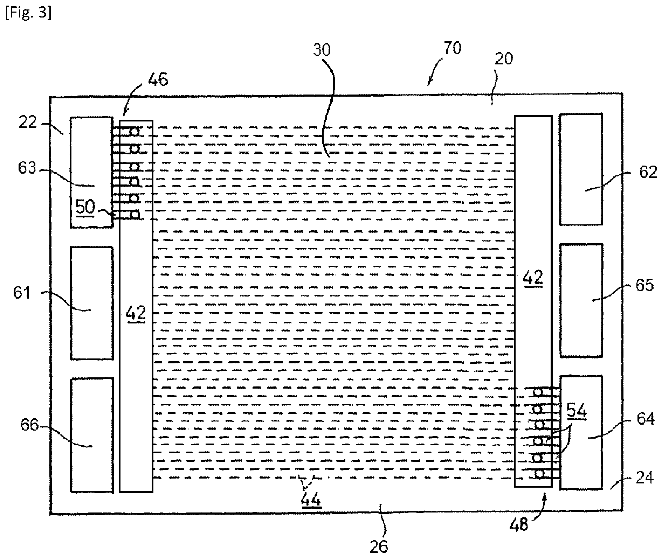

Une cellule de pile à combustible selon l'invention est du type de celle décrite en lien avec les figures 1 et 2. Elle comporte deux plaques bipolaires 70 du type de celle représentée à la figure 3 et un assemblage membrane électrode du même type que celui décrit en référence aux figures 1 et 2. Les plaques bipolaires 70 sont agencées pour coopérer ensemble de sorte que l'assemblage membrane électrode soit interposé en sandwich entre les plaques 70. Une pile à combustible selon l'invention comporte un empilement (« stack » en anglais) de cellules telles que décrites ci-dessus.

En référence à la figure 3, la plaque bipolaire 70 de l'invention est de forme rectangulaire en section. Dans un exemple de réalisation, sa longueur est supérieure à environ deux fois sa largeur.

Lorsque la pile est en position d'utilisation, la plaque bipolaire 70 s'étend dans un plan vertical et elle comporte un premier bord transversal 22, un deuxième bord transversal 24 opposé au premier bord transversal 22, un bord longitudinal supérieur 20, un bord longitudinal inférieur 26, une zone centrale 30 disposée entre les bords 20, 22, 24, 26. La plaque bipolaire 70 comporte une troisième ouverture 63 d'entrée d'un comburant disposée dans le premier bord transversal 22.

Des canaux d'introduction 50 du comburant sont réalisés dans la plaque 70 de sorte à assurer l'introduction du comburant depuis la troisième ouverture 63 dans une chambre de distribution du comburant 42 disposée dans la plaque 70 au niveau du premier bord transversal 22.

La chambre de distribution du comburant 42 comporte des plots ou des lignes de soudure permettant de favoriser l'homogénéité de la distribution du comburant ainsi introduit, de sorte à le faire circuler au niveau de la zone centrale 30, et plus particulièrement à le faire circuler dans l'électrode cathodique de l'assemblage membrane électrode venant en appuis sur une face de la plaque bipolaire 70. La chambre de distribution 42 s'étend verticalement sur toute la hauteur de la zone centrale 30.

Des canaux de circulation 44 du comburant sont disposés dans la zone centrale 30, à la surface de la plaque 70 et d'un côté de celle-ci, de sorte à permettre la circulation du comburant. Ces canaux de circulation 44 s'étendent dans l'axe longitudinal de la plaque 70 et débouchent dans une autre chambre de distribution du comburant 42 située au niveau du deuxième bord transversal 24.

La plaque bipolaire 70 comporte également une quatrième ouverture 64 de collecte du comburant disposée dans le deuxième bord transversal 24.

Des canaux de collecte 54 du comburant sont réalisés dans la plaque 70 de sorte à assurer la collecte du comburant depuis la chambre de distribution 42 située au niveau du deuxième bord transversal dans la quatrième ouverture 64. Ces canaux de collecte 54 permettent ainsi de collecter le comburant ayant circulé dans les canaux de circulation 44 et ayant été distribués par la chambre de distribution 42.

Sur la figure 3, une seule face de la plaque 70 est visible et sur cette face, les chambres de distribution du comburant 42, les canaux de circulation 44, les canaux d'introduction 50 et les canaux de collecte 54 sont visibles.

Lorsque la pile est assemblée, les troisièmes ouvertures 63 d'entrée et les quatrièmes ouvertures 64 de collecte du comburant de toutes les plaques se superposent en formant un collecteur transportant le comburant à travers la pile. Lorsque la pile est en position d'utilisation, le collecteur s'étend selon un axe orthogonal à une largeur de la plaque 70. La plaque bipolaire 70 comporte une première ouverture 61 d'entrée d'un fluide caloporteur disposée dans le premier bord transversal 22.

De manière analogue, des canaux d'introduction du fluide caloporteur sont réalisés dans la plaque 70 de sorte à assurer l'introduction du fluide caloporteur depuis la première ouverture 61 dans une chambre de distribution disposée dans la plaque 70 au niveau du premier bord transversal. La chambre de distribution comporte des plots ou des lignes de soudure permettant de favoriser l'homogénéité de la distribution du fluide caloporteur ainsi introduit de sorte à le faire circuler à l'intérieur de la plaque bipolaire 70 au niveau de la zone centrale 30. Avantageusement, la chambre de distribution du fluide caloporteur peut être formée par un motif complémentaire de celui appliqué à la chambre de distribution du comburant ou du carburant. La chambre de distribution s'étend verticalement sur toute la hauteur de la zone centrale 30.

Des canaux de circulation du fluide caloporteur non représentés sont disposés dans la zone centrale 30 de sorte à permettre la circulation du fluide. Ces canaux s'étendent dans l'axe longitudinal de la plaque 70 et débouchent dans une chambre de distribution du fluide caloporteur située au niveau du deuxième bord transversal.

La plaque bipolaire 70 comporte également une deuxième ouverture de collecte du fluide caloporteur 62 disposée dans le deuxième bord transversal 24.
Des canaux de collecte du fluide caloporteur sont réalisés dans la plaque 70 de sorte à assurer la collecte du fluide caloporteur depuis la chambre de distribution située au niveau du deuxième bord transversal dans la deuxième ouverture 62. Ces canaux de collecte permettent ainsi de collecter le fluide caloporteur ayant circulé dans les canaux de circulation et ayant été distribués par la chambre de distribution du fluide caloporteur. Lorsque la pile est assemblée, les premières ouvertures 61 d'entrée et les deuxièmes ouvertures 62 de collecte du fluide caloporteur de toutes les plaques se superposent en formant un collecteur transportant le fluide caloporteur à travers la pile. Lorsque la pile est en position d'utilisation, le collecteur s'étend selon un axe orthogonal à une largeur de la plaque 70.

La plaque bipolaire 70 comporte une cinquième ouverture 65 d'entrée d'un carburant disposée dans le deuxième bord transversal 24.

De manière analogue, des canaux d'introduction du carburant sont réalisés dans la plaque 70 de sorte à assurer l'introduction du carburant depuis la cinquième ouverture 65 dans une chambre de distribution du carburant disposée dans la plaque 70 au niveau du deuxième bord transversal 24.

La chambre de distribution du carburant comporte des plots ou des lignes de soudure permettant de favoriser l'homogénéité de la distribution du carburant ainsi introduit, de sorte à le faire circuler au niveau de la zone centrale 30, et plus particulièrement à le faire circuler dans l'électrode anodique de l'assemblage membrane électrode venant en appuis sur l'autre face de la plaque bipolaire 70. La chambre de distribution s'étend verticalement sur toute la hauteur de la zone centrale 30.

Des canaux de circulation du carburant sont disposés dans la zone centrale 30, à la surface de la plaque 70 et de l'autre côté de celle-ci, de sorte à permettre la circulation du carburant. Ces canaux de circulation s'étendent dans l'axe longitudinal de la plaque 70 et débouchent dans une autre chambre de distribution du carburant située au niveau du premier bord transversal 22.

La plaque bipolaire 70 comporte également une sixième ouverture 66 de collecte du carburant disposée dans le premier bord transversal 22.

Des canaux de collecte du carburant sont réalisés dans la plaque 70 de sorte à assurer la collecte du carburant depuis la chambre de distribution située au niveau du premier bord transversal 22 dans la sixième ouverture 66. Ces canaux de collecte permettent ainsi de collecter le carburant ayant circulé dans les canaux de circulation et ayant été distribués par la chambre de distribution.

Lorsque la pile est assemblée, les cinquièmes ouvertures 65 d'entrée et les sixièmes ouvertures 66 de collecte du carburant de toutes les plaques se superposent en formant un collecteur transportant le carburant à travers la pile. Lorsque la pile est en position d'utilisation, le collecteur s'étend selon un axe orthogonal à une largeur de la plaque 70.

## Revendications

1. Plaque bipolaire (70) de pile à combustible, la plaque (70) s'étendant dans un plan vertical lorsque la pile est en position d'utilisation, en position verticale d'utilisation, la plaque (70) comportant un premier bord transversal (22), un deuxième bord transversal (24) opposé au premier bord transversal (22), un bord longitudinal supérieur (20), un bord longitudinal inférieur (26), une zone centrale (30) disposée entre les bords (20, 22, 24, 26), une première ouverture (61) d'entrée d'un fluide caloporteur, une deuxième ouverture (62) de collecte du fluide caloporteur, une troisième ouverture (63) d'entrée d'un comburant, notamment d'air, une quatrième ouverture (64) de collecte du comburant, une cinquième ouverture (65) d'entrée d'un carburant, notamment de dihydrogène, une sixième ouverture (66) de collecte du carburant, les première (61), troisième (63) et sixième (66) ouvertures étant disposées dans le premier bord transversal (22) et étant disposées axialement les unes par rapport aux autres, les deuxième (62), quatrième (64) et cinquième (65) ouvertures étant disposées dans le deuxième bord transversal (24) et étant disposées axialement les unes par rapport aux autres, la plaque (70) comportant au moins une chambre de distribution (42), **caractérisée en ce qu'**en position verticale d'utilisation de la plaque :
- la sixième ouverture (66) est disposée au-dessous des première (61) et troisième (63) ouvertures,
- la quatrième ouverture (64) est disposée au-dessous des deuxième (62) et cinquième (65) ouvertures,
- la deuxième ouverture (62) est disposée au-dessus des quatrième (64) et cinquième (65) ouvertures.

2. Plaque (70) selon la revendication précédente, **caractérisée en ce qu'**en position verticale d'utilisation de la plaque, la troisième ouverture (63) est disposée au-dessus des première (61) et sixième (66) ouvertures.

3. Plaque (70) selon l'une des revendications précédentes, **caractérisée en ce que** la chambre de distribution (42) est disposée au niveau du premier bord transversal (22), à la surface de la plaque (70), la chambre de distribution (42) s'étendant notamment au moins en vis-à-vis des troisième (63), première (61) et sixième (66) ouvertures.

4. Plaque (70) selon l'une des revendications précédentes, la chambre de distribution (42) comportant des motifs en saillie, notamment des plots ou des lignes de soudure, pour favoriser l'homogénéité de la distribution d'un fluide.

5. Plaque (70) selon l'une des revendications précédentes, **caractérisée en ce qu'**elle comporte des canaux de circulation (44) disposés dans la zone centrale (30), notamment à la surface de la plaque (70), par exemple sous la forme d'une ondulation de ladite surface.

6. Plaque (70) selon la revendication précédente, **caractérisée en ce que** les canaux de circulation (44) s'étendent dans l'axe longitudinal de la plaque (70).

7. Plaque (70) selon l'une des revendications précédentes, chaque ouverture (61, 62, 63, 64, 65, 66) comportant un trou traversant la plaque (70) dans son épaisseur.

8. Cellule de pile à combustible, notamment de pile à combustible à membrane échangeuse de protons, **caractérisée en ce qu'**elle comporte deux plaques bipolaires (70) selon l'une des revendications précédentes et un assemblage membrane électrode, les plaques (70) étant agencées pour coopérer ensemble et **en ce que** l'assemblage membrane électrode est interposé en sandwich entre les plaques (70).

9. Pile à combustible, notamment à membrane échangeuse de protons, comportant au moins une cellule selon la revendication précédente.

10. Pile à combustible selon la revendication précédente, **caractérisée en ce qu'**elle comporte :
- un collecteur d'entrée d'un fluide caloporteur destiné à être raccordé avec une arrivée de fluide caloporteur pour permettre au fluide de circuler dans la première ouverture (61),
- un collecteur d'entrée d'un comburant destiné à être raccordé avec une arrivée de comburant pour permettre au comburant de circuler dans la troisième ouverture (63), et
- un collecteur d'entrée d'un carburant destiné à être raccordé avec une arrivée de carburant pour permettre au carburant de circuler dans la cinquième ouverture (65).
